# EUROPÄISCHE PATENTSCHRIFT

(11) **EP 0 607 603 B1**
(45) Veröffentlichungstag und Bekanntmachung des Hinweises auf die Patenterteilung: **04.09.1996**
(21) Anmeldenummer: 93120791.4
(22) Anmeldetag: 23.12.1993
(51) Int. Cl.: A01B 63/00, A01C 7/08, A01C 7/20

(54) **Arbeitsgerät mit wenigstens zwei Sätzen von Arbeitswerkzeugen**
Working implements with at least two gangs of working tools
Machine de travail avec au moins deux groupes d'outils de travail

(30) Priorität: 22.01.1993 US 7863
(43) Veröffentlichungstag der Anmeldung: 27.07.1994
(73) Patentinhaber: DEERE & COMPANY, Moline, Illinois 61265 (US)
(72) Erfinder: Long, John David, Ankeny, Iowa 50021 (US); Clark, Richard Hugo, Geneseo, Illinois (US)
(74) Vertreter: Feldmann, Bernhard

(56) Entgegenhaltungen:
- FR-A- 2 137 926
- US-A- 4 413 685
- US-A- 5 065 681

## Beschreibung

Die Erfindung bezieht sich auf ein Arbeitsgerät mit einem Grundrahmen, wenigstens zwei Sätzen von Arbeitswerkzeugen, die an dem Grundrahmen zwischen einer ausgehobenen Transportstellung und einer abgesenkten Arbeitsstellung auf dem Feld verstellbar angeschlossen sind, wenigstens zwei Hubzylindern, von denen jeweils einer mit einem Satz Arbeitswerkzeugen verbunden ist, und mit einer zwischen den Hubzylindern und einer Druckquelle vorgesehenen Steuereinrichtung, die derart betätigbar bzw. stellbar ist, daß die Sätze Arbeitswerkzeuge gemeinsam in ihre Arbeitsstellung abgesenkt oder gemeinsam in ihre Transportstellung ausgehoben werden.

Derartige Arbeitsgeräte werden insbesondere in der Landwirtschaft eingesetzt, und ihre Arbeitswerkzeuge können den Boden bearbeiten oder Saatgut oder Düngemittel auf einem Feld ausbringen. Als Beispiele können Bodenbearbeitungsgeräte, Pflanzenschutzgeräte, Düngerstreuer oder Sämaschinen benannt werden, wobei im Falle der Sämaschinen zu den Arbeitswerkzeugen Furchenöffner gehören, die in der Arbeitsstellung in den Boden eindringen. Die Arbeitsbreite solcher Geräte, die in der Regel von einem Ackerschlepper über das Feld gezogen werden, wird immer größer. Sie kann bis zu 10m und mehr betragen. Um nun ein Feld zu bestellen, sind verschiedenste Fahrmethoden denkbar. Der Schlepperfahrer kann mit der ersten Bahn am Feldrand beginnen, wendet am Feldende und legt die zweite Bahn beim entgegengesetzten Fahren neben die erste Bahn. Er kann aber auch die zweite Bahn von der ersten entfernt legen, beispielsweise in der Feldmitte und fährt dann in mit immer kleiner werdenden Wendekurven. Wie er auch immer fährt, es werden am Schluß immer unbestellte Streifen in der Feldmitte oder am Feldrand übrigbleiben, die schmaler als die Arbeitsbreite des Gerätes sind. In solchen Fällen und insbesondere in Fällen, in denen das Feld nicht rechteckig angelegt ist, entsteht das Problem der Doppelbearbeitung, d.h. beispielsweise nochmaliges Ausstreuen von Dünger oder Austragen von Saatgut, was vermieden werden soll. Die einfachste Lösung wäre natürlich, solche Stücke unbearbeitet liegen zu lassen. Eine andere bei Sämaschinen bereits bekannt gewordene Lösung zur Vermeidung einer Doppelaussaat sieht eine elektronische Steuerung für eine Antriebskupplung vor, über die der Antrieb für Dosiereinrichtungen abgeschaltet werden kann. Eine Doppelaussaat wird zwar hierdurch vermieden, jedoch bleiben die Furchenöffner bzw. die Arbeitswerkzeuge am Boden, wodurch bereits besäte Parzellen beeinträchtigt werden.

Bei dem als Sämaschine ausgebildeten Arbeitsgerät, von dem die Erfindung ausgeht (US-A-5 065 681), werden die in Gruppen aufgeteilten Arbeitswerkzeuge durch zueinander parallel geschaltete Hubzylinder gemeinsam hochgefahren, wobei in der Bodenstellung auf die Arbeitswerkzeuge noch ein zusätzlicher hydraulicher Druck ausgeübt werden kann, damit die als Furchenöffner ausgebildeten Arbeitswerkzeuge gleich tief in den Boden eindringen und den Samen in gleicher Bodentiefe ablegen. In der Transportstellung ist ein Austritt von Saatgut automatisch unterbrochen.

Es ist auch nicht mehr neu (FR-A-2 137 926), bei einem überbreiten Arbeitsgerät die Eindringtiefe der Arbeitswerkzeuge in den Boden hydraulisch zu steuern. Im einzelnen ist dieses Arbeitsgerät mittig an die Dreipunktgerätekupplung eines Schleppers angeschlossen und mit äußeren Rahmenteilen versehen, die Arbeitswerkzeuge fest aufnehmen und sich an ihren Enden über Laufräder auf dem Boden abstützen. Den Laufrädern sind doppelseitig beaufschlagbare Hubzylinder zugeordnet, die bei sich ändernden Bodenverhältnissen über vorgeschaltete elektromagnetisch betätigbare Ventile in einem hebenden oder senkendem Sinne automatisch druckbeaufschlagt werden, damit das Gerät im Einsatz überhaupt gezogen werden kann. Zum Ausheben dieses Arbeitsgerätes muß die Schlepper-Dreipunktgerätekupplung ausgehoben werden. Zum individuellen Ansteuern der Hubzylinder sind verschiedene Stromkreise mit automatisch und von Hand verstellbaren Schaltern vorgesehen.

Die mit der Erfindung zu lösende Aufgabe wird darin gesehen, den bei dem gattungsmäßig berücksichtigten Arbeitsgerät vorgesehenen Aushubmechanismus in einfacher und kostengünstiger Weise mit einer Vorrichtung zu versehen, die eine Doppelbearbeitung verhindert. Die Erfindung sieht deshalb noch eine Teilbreitensteuerung zur Änderung der Arbeitsbreite des Gerätes mit wenigstens zwei zwischen zwei Stellungen verstellbaren Ventilen vor, die einem jeden Hubzylinder zugeordnet, in deren Verbindung zur Druckquelle vorgesehen und derart fernbedienbar sind, daß bei einer Stellung der Steuereinrichtung, in der die Sätze Arbeitswerkzeuge in ihrer Arbeitsstellung abgesenkt sind, ein Satz Arbeitswerkzeuge oder mehrere Sätze Arbeitswerkzeuge oder alle Sätze Arbeitswerkzeuge in ihre Transportstellung ausgehoben werden. Auf diese Weise arbeitet die Erfindung in der ersten Stellung des Ventils, wie das gattungsmäßig berücksichtigte Arbeitsgerät, während in der zweiten Stellung des Ventils ein Hochsteuern mindestens einer Gruppe Arbeitswerkzeuge in die Transportstellung von einem ziehenden Fahrzeug aus möglich ist.

Nach einem weiteren Vorschlag der Erfindung kann jedes Ventil als elektromagnetisches Umkehr- oder als Sperrventil ausgebildet sein. Im Falle des Umkehrventils ist dieses als Vierwege/Zweistellungsventil ausgebildet, wobei die Hubzylinder zueinander parallel geschaltet sind.

Bei dem bekannten Arbeitsgerät kann die Steuereinrichtung als ein zwischen einer ersten und einer zweiten Stellung verstellbares Steuerventil ausgebildet sein, das in seiner ersten Stellung eine Druckmittelbeaufschlagung der zylinderseitigen Enden der Hubzylinder und in seiner zweiten Stellung eine Druckmittelbeaufschlagung der kolbenstangenseitigen Enden der Hubzylinder zuläßt, weshalb nach der Erfindung für einen solchen Fall noch vorgesehen sein kann, daß jedes Umkehrventil in seiner ersten Stellung die Druckmittelbeaufschlagung der Hubzylinder durch das Steuerventil unverändert läßt und in seiner zweiten Stellung die Druckmittelbeaufschlagung der Hubzylinder umkehrt. Damit braucht zum Hochsteuern aus der Feldstellung die Stellung der Steuereinrichtung nicht verändert zu werden. Wird das Umkehrventil wieder in seine zweite Stellung zurückgeführt, kehrt die hochgesteuerte Gruppe automatisch in ihre vorgegebene Feldstellung zurück. Für eine Fernbedienung ist jedes Umkehrventil mit einem Solenoid versehen, und jeder Solenoid ist mit einer elektrischen Kraftquelle über einen von Hand betätigbaren Schalter verbindbar, wobei der Schalter in der ersten Stellung des Umkehrventils offen und in der zweiten Stellung des Umkehrventils geschlossen ist. Damit aber dann insbesondere am Feldende alle Gruppen gemeinsam hochgesteuert werden können, wird weiter vorgeschlagen, daß die Eingänge der Schalter mit ihren Ausgängen verdrahtet sind und daß in dieser Verbindung ein Haupthubschalter vorgesehen ist. Bei einer solchen Verdrahtung kann die Steuereinrichtung ebenfalls in ihrer Stellung verbleiben, in der die Arbeitswerkzeuge normalerweise ihre Feldstellung einnehmen. Um ein Übersteuern der einzelnen Schalter zu erleichtern, können noch zwischen dem Haupthubschalter und den Ausgängen der Schalter Dioden vorgesehen sein.

Hinsichtlich einer einfachen aber zweckmäßigen Verdrahtung sieht die Erfindung vor, daß die Eingänge der Schalter mit dem Ausgang eines normalerweise offenen Relaisschalters eines ersten Relais verbunden sind, dessen Spule mit der ersten Ausgangsklemme eines Tasters und mit dem Eingang eines normalerweise geschlossenen Relaisschalters eines zweiten Relais verbunden ist, dessen Spule mit einer zweiten Ausgangsklemme des Tasters verbunden und ebenso wie der Ausgang des normalerweise geschlossenen Relaisschalters geerdet ist, wobei der Eingang des normalerweise offenen Relaisschalters und der Eingang des Tasters mit der elektrischen Kraftquelle und der Ausgang des normalerweise offenen Relaisschalters mit dem Eingang seiner Spule verbunden sind. Der Taster ist hierbei als einpoliger Hauptumschalter ausgebildet, der nach seinem Antippen in seine Nullstellung zurückkehrt, da sich am ersten Relais eine Halteschleife bildet, die die Spule dieses Relais erregt hält. Der erste Ausgang des Tasters kann zusätzlich noch mit den Eingängen der Schalter verbunden werden.

Sind die Ventile nicht als Umkehrventile sondern als Sperrventile ausgestaltet, so läßt jedes Sperrventil in seiner ersten Stellung die Druckmittelbeaufschlagung der Hubzylinder durch das Steuerventil unverändert, wobei es in seiner zweiten Stellung eine der beiden zu jeden Hubzylinder führenden Leitungen sperrt.

In der Zeichnung ist ein nachfolgend näher erläutertes Ausführungsbeispiel der Erfindung dargestellt. Es zeigt:
- Fig. 1: ein Arbeitsgerät in Form einer Sämaschine mit in Gruppen angeordneten Säeinheiten,
- Fig. 2: einen nur teilweise dargestellten hydraulischen und einen elektrischen Steuerkreis zum Steuern von den einzelnen Gruppen zugeordneten Hubzylindern,
- Fig. 3: eine Steuerbox für den elektrischen Steuerkreis nach Fig. 2 und
- Fig. 4: eine Ausführungsvariante für die Hubzylinder steuernde Sperrventile.

In der Zeichnung ist ein in der Landwirtschaft einsetzbares Gerät mit 10 bezeichnet, das als Sämaschine ausgebildet sein kann. Derartige Geräte haben in der Regel eine relativ große Arbeitsbreite, die für Transportfahrten verringert werden kann aber nicht muß. Das Gerät 10 hat einen Grundrahmen 12 und stützt sich im Einsatz auf Laufrädern 14 und 16 ab. Über eine Deichsel 18 ist das Gerät 10 an ein ziehendes Fahrzeug, wie einen in der Zeichnung nicht gezeigten Ackerschlepper, anhängbar.

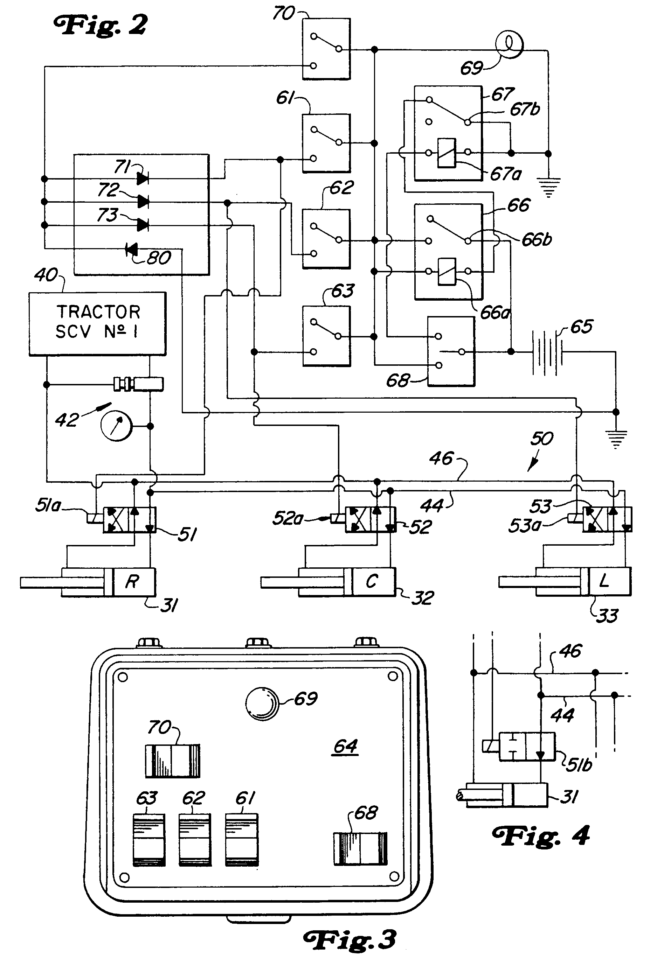

Das Gerät 10 ist als Mehrgruppengerät ausgebildet und hat beim bevorzugten Ausführungsbeispiel drei Gruppen 21, 22 und 23 mit Sätzen 25, 26 und 27 herkömmlicher im Einsatz in den Boden eindringender Werkzeuge 30, wie Furchenöffner zum Ablegen des Saatgutes in den Boden. Die Eindringtiefe ist regulierbar, und jede Gruppe bzw. jeder Satz 25, 26 und 27 ist zwischen einer unteren Arbeitsstellung und einer höher liegenden Transportstellung über doppelseitig beaufschlagbare Zylinder 31, 32 und 33 verstellbar. Jedem Satz Werkzeuge 25, 26, 27 ist eine in der Zeichnung nicht dargestellte Kurbelwelle zugeordnet, die über die Zylinder 31, 32, 33 um eine quer verlaufende Achse mit Bezug auf den Grundrahmen 12 zum Verstellen der Arbeitswerkzeuge verschwenkt werden können. Die Zylinder 31, 32 und 33 sind mit einer am ziehenden Fahrzeug vorgesehenen Druckquelle für hydraulische Flüssigkeit verbunden und über ein herkömmliches Steuerventil 40 steuerbar. Zwischen dem Steuerventil 40 und den Zylindern 31, 32 und 33 ist noch ein Druckregulator 42 vorgesehen. Aus Fig. 2 ist noch zu erkennen, daß die Zylinder 31, 32, 33 normalerweise über eine Leitung 44, die an den zylinderseitigen Enden der Zylinder angeschlossen ist, und über eine Leitung 46, die an den kolbenstangenseitigen Enden der Zylinder angeschlossen ist, zueinander parallel geschaltet sind. Bei einer Druckbeaufschlagung der kolbenstangenseitigen Enden der Zylinder werden die Kurbelwellen in einem Drehsinn verschwenkt, der ein An- bzw. Ausheben der Werkzeuge 30 bewirkt. Eine Druckbeaufschlagung der zylinderseitigen Enden der Zylinder resultiert in einem Absenken der Arbeitswerkzeuge 30 in ihre Arbeitsstellung und gleichzeitig zum Aufrechterhalten eines vorwählbaren nach unten gerichteten Drucks auf die Arbeitswerkzeuge 30 in Abhängigkeit von der Einstellung des Druckregulators 42. Der Druck am zylinderseitigen Ende der Zylinder und damit der auf die Werkzeuge in der Arbeitsstellung einwirkende Druck wird somit durch die Einstellung des Druckregulators bestimmt. Ein solches System und insbesonde re dessen Einzelheiten gehen aus dem Dokument US-A-5 065 681 hervor, auf das ausdrücklich Bezug genommen wird.

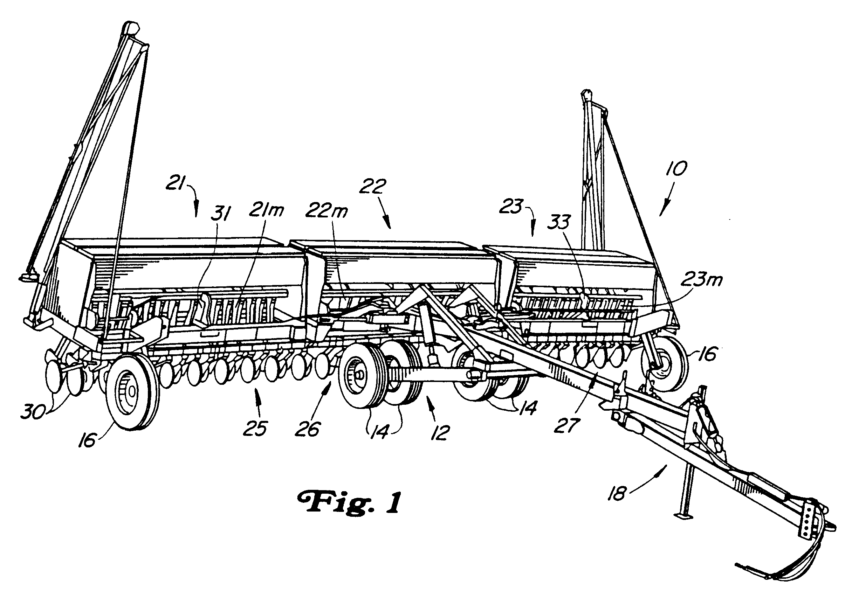

Die vorliegende Erfindung geht grundsätzlich von einem derartigen System aus, ist aber überall dort einsetzbar, wo es darum geht, eine Doppelbearbeitung zu vermeiden. Denn je nach der Fahrweise oder Bearbeitungsweise eines Ackers oder Feldes kann es insbesondere bei sehr breiten Geräten vorkommen, daß das Gerät bereits bearbeitete Streifen nochmals überfahren muß, allerdings nicht in seiner gesamten Breite. Eine Doppelbearbeitung ist mit einem erhöhten finanziellen Aufwand verbunden, kann zu Nacharbeiten führen oder den Boden zu stark belasten. Beispiele wären ein doppeltes Ausbringen von Saat- oder Pflanzgut oder von Chemikalien. Ebenfalls wäre eine doppelte Bodenbearbeitung wenig hilfreich. Nach dem bevorzugten Ausführungsbeispiel lassen sich deshalb die einzelnen Sätze Arbeitswerkzeuge individuell hochsteuern, wobei dann im Falle eines Ausbringers (Dünge-, Pflanz- oder Sämaschine z.B.) ein Ausbringen des Gutes noch unterbrochen ist. Beim dargestellten Ausführungsbeispiel weisen die einzelnen Gerätegruppen ein herkömmliches Mengenregelungssystem (21m - 23m in Fig. 1) mit Saatgutdosierern und einer Antriebswelle auf, deren Antrieb über eine nicht dargestellte Kupplung automatisch abgeschaltet wird, sobald die Werkzeuge 30 sich der Transportstellung nähern. Andererseits werden die Saatgutdosierer wieder angetrieben bzw. die Kupplung wird automatisch wieder eingerückt, wenn sich die Werkzeuge 30 ihrer Arbeitsstellung nähern bzw. sich wieder in dieser befinden.

Zum Hochsteuern der einzelnen Werkzeugsätze ist eine Teilbreitensteuerung 50 vorgesehen und im einzelnen in Fig. 2 dargestellt. Sie weist Umkehrventile 51, 52 und 53 auf, die zwischen den Leitungen 44 und 46 vorgesehen sind und über die sich bei einer ersten Ausführung die Leitung 44 mit den kolbenstangenseitigen Enden der Zylinder 31 bis 33 und die Leitung 46 mit den zylinderseitigen Enden der Zylinder 31 bis 33 verbinden läßt. Die Umkehrventile 51 bis 53 sind als Vierwege/Zweistellungsventil ausgebildet und jeweils mit einem Solenoid 51a, 52a und 53a versehen. Sind die Solenoide nicht aktiviert, dann nehmen die Umkehrventile 51 bis 53 die in Fig. 2 erkennbare Stellung ein, in der bei Betätigung des Steuerventils 40 ein herkömmliches Anheben und Absenken der Werkzeuge 30 erfolgt, und zwar gemeinsam über die Gesamtbreite des Gerätes. Gleichzeitig ist in der Arbeitsstellung der einstellbare und auf alle Werkzeuge wirkende Bodendruck erzeugbar, wie es in dem bereits genannten Dokument US-A-5 065 681 beschrieben ist.

Jedes Solenoid 51a, 52a, 53a ist mit der einen Seite eines Schalters 61, 62, 63 verdrahtet, die an einer Schalttafel 64 oder Schaltbox am Fahrerstand des ziehenden Fahrzeuges vorgesehen sind und deren andere Seite an eine Energiequelle 65 am Fahrzeug über ein Verriegelungsrelais 66 angeschlossen sind, das einen Solenoid 66a und einen Relaisschalter 66b aufweist. Ein weiteres Relais 67 mit einem Solenoid 67a und einem normalerweise geschlossenen Relaisschalter 67b ist noch zwischen dem Solenoid 66a und der Masse vorgesehen. Ein einpoliger Hauptumschalter 68 ist zwischen den Relais 66 und 67 und der Energiequelle 65 vorgesehen. Dieser Umschalter 68 ist als ein kurzzeitig einschaltbarer Kippschalter ausgebildet, der einen unteren an die Schalter 61 bis 63 und an das Relaissolenoid 66a angeschlossenen Ausgang für eine Anstellung und einen oberen an das Solenoid 67a angeschlossenen Ausgang für eine Ausstellung aufweist. Wird der Kippschalter in seine untere Anstellung gekippt, dann wird das Solenoid 66a aktiviert und der Relaisschalter 66b geschlossen. Damit entsteht eine Halteschleife, die den Relaisschalter 66b geschlossen hält, so daß die Eingänge der Schalter 61, 62 und 63 mit Energie versorgt werden können. Wird danach der Kippschalter 68 in seine Ausstellung gekippt, so öffnet sich der normalerweise geschlossene Relaisschalter 67b und die Verbindung des Solenoids 66a mit der Masse wird unterbrochen. Der Relaisschalter 66b öffnet und die Energiezufuhr zu den Schaltern 61 bis 63 ist unterbrochen. Um die Schalter 61 bis 63 wieder an Spannung anlegen zu können, muß der Umschalter 68 wieder in seine Anstellung kurzzeitig gekippt werden, damit ein Haltekreis für den Relaisschalter 66b wieder entstehen kann. Eine Anzeigelampe 69 ist noch zwischen dem Ausgang des Relais 66 und der Masse vorgesehen, damit eine Bedienungsperson erkennen kann, daß die Schaltbox 64 aktiviert ist.

Bei angezogenem Relais 66 (Relaisschalter 66b ist geschlossen) bewirkt ein Verstellen des Schalters 61 in seine geschlossene Stellung oder Einschaltstellung, daß das Solenoid 51a aktiviert und dadurch die Spule des Ventils 51 aus der in Fig. 2 gezeigten Stellung nach rechts verschoben wird, wodurch der normale Flüssigkeitsfluß zu und aus dem Zylinder 31 umgekehrt wird. Eine Betätigung des Schalters 62 oder 63 im Schließsinne verursacht eine Aktivierung des Solenoids 52a oder 53a und damit eine entsprechende Umkehrung des normalen Flüssigkeitsflusses zu und aus dem entsprechenden Zylinder 32 oder 33. Ein Rückführen der Schalter 61, 62 oder 63 in ihre Aussstellung deaktiviert die zugehörigen Solenoide, so daß die entsprechenden Umkehrventile 51, 52 oder 53 in ihre in Fig. 2 gezeigten Normalstellungen zurückkehren, in denen eine herkömmliche Zylinderbetätigung erfolgt.

Desweiteren ist noch ein Haupthubschalter 70 an den Ausgang des Relais 66 und an die Solenoide 51a, 52a und 53a angeschlossen, wobei in dieser Verbindung noch Blockdioden 71, 72 und 73 vorgesehen sind. Mit den Dioden 71 bis 73 ist noch eine Diode 80 verbunden, um negative Spannungsspitzen beim Öffnen irgendeines Schalters zu begrenzen.

Beim Schließen des Schalters 70 werden alle Solenoide 51a, 52a und 53a aktiviert und der Flüssigkeitsfluß zu den Zylindern wird umgekehrt, wodurch die Kolben in die zugehörigen Zylinder eingefahren und die Werkzeuge ausgehoben werden, und zwar unabhängig von der Stellung der Schalter 61, 62 und 63. Damit kann eine Bedienungsperson bei eingeschalteter Schaltbox 64 den Schalter 70 ohne Betätigung des Steuerventils 40 oder ohne Verstellung eines der Schalter 61 bis 63 dazu benutzen, um alle Werkzeuge auszuheben, was beispielsweise am Ende eines Feldes und beim Wenden erfolgt. Sobald der Schalter 70 danach wieder geöffnet wird, kehren die Kolben der Zylinder in ihre vorherigen Stellungen, die von den jeweiligen Schaltstellungen der Schalter 61, 62 und 63 abhängig sind, zurück.

Sind alle Solenoide 51a bis 53a deaktiviert und befinden sich die Werkzeuge 30 an allen Gerätegruppen 21 bis 23 in ihrer ausgehobenen Stellung, dann betätigt eine Bedienungsperson, um die Werkzeuge in ihre Arbeitsstellungen zu verbringen, das Steuerventil entsprechend, wodurch die Leitung 44 druckführend wird, die Kolben aus den entsprechenden Zylindern 31, 32 und 33 ausgefahren und die Werkzeuge in den Boden verschwenkt werden, wobei auf die zylinderseitigen Enden ein durch den Druckregulator vorgegebener Druck wirkt. Will nun die Bedienungsperson einen einzelnen Satz Werkzeuge aus den Boden ausheben und einen Saatgutfluß zu diesem Satz unterbrechen, so aktiviert sie das zu diesem Satz gehörige Solenoid 51a, 52a oder 53a, wodurch der Flüssigkeitsfluß zu dem zugehörigen Zylinder umgekehrt wird. Will beispielsweise die Bedienungsperson ein doppeltes Säen an der rechten Seite der Maschine verhindern, so verstellt sie bei eingeschalteter Schaltbox 64 den Schalter 61 in seine Schließstellung, worauf das Solenoid 51a aktiviert wird. Dies wiederum bewirkt, daß die Spule des Umkehrventils 51 aus seiner in Fig. 2 gezeigten Stellung nach rechts verstellt wird, so daß der Kolben des Zylinders 31 eingefahren, der Werkzeugsatz 25 der Gerätegruppe 21 aus dem Boden ausgehoben und die Saatgutzufuhr zu diesem Satz unterbrochen wird. Um zu einen Aussäen über die gesamte Maschinenbreite zurückzukehren, wird das Solenoid 51a durch Öffnen des Schalters deaktiviert. Das Umkehrventil 51 kehrt in seine in Fig. 2 gezeigte Stellung zurück, und die Werkzeuge werden wieder in den Boden geführt. Zur Vermeidung eines doppelten Sävorganges an der linken Seite, wird das Solenoid 53a aktiviert und die Werkzeuge an der Gruppe 23 werden ausgehoben. Für ein schmales Säen werden zwei Solenoide 51a, 52a, 53a aktiviert, um die zugehörigen zwei Sätze Werkzeuge 25 bis 27 ausheben zu können, wobei lediglich ein einziger Satz einsatzbereit bleibt. Jede beliebige Kombination von Werkzeugsätzen kann ausgehoben werden, um eine doppelte Aussaat zu vermeiden.

Fig. 4 zeigt ein Ausführungsbeispiel, bei dem unter Fortlassung des Haupthubschalters 70 die Umkehrventile 51 bis 53 durch Blockierungsventile 51b ersetzt wurden, die wahlweise eine Druckmittelzufuhr zu dem zylinderseitigen Ende der Zylinder bei aktiviertem Solenoid bzw. bei einem eingeschalteten Schalter 61 bis 63 blockieren. Befinden sich alle Werkzeuge in ihrer Arbeitsstellung, dann muß die Bedienungsperson das Ventil 51b aktivieren bzw. die Druckmittelzufuhr zu dem zylinderseitigen Ende des Zylinders blockieren, dessen zugehörige Werkzeuggruppe fortfahren soll auszusäen. Die Arbeitswerkzeuge der anderen Gruppe oder Gruppen werden in herkömmlicher Weise hydraulisch ausgehoben und die Saatgutzufuhr gestoppt, wobei nur die ausgewählte Gruppe betriebsbereit in ihrer Arbeitsstellung verbleibt. Um danach wieder auf der gesamten Maschinenbreite aussäen zu können, werden die ausgehobenen Gruppen wieder abgesenkt und das Ventil 51b wird deaktiviert für einen normalen Flüssigkeitszufluß zu dem entsprechenden Zylinder.

## Patentansprüche

1. Arbeitsgerät mit einem Grundrahmen (12), wenigstens zwei Sätzen (25, 26, 27) von Arbeitswerkzeugen (30), die an dem Grundrahmen (12) zwischen einer ausgehobenen Transportstellung und einer abgesenkten Arbeitsstellung auf dem Feld verstellbar angeschlossen sind, wenigstens zwei Hubzylindern (31, 32, 33), von denen jeweils einer mit einem Satz (25, 26, 27) Arbeitswerkzeugen (30) verbunden ist, und mit einer zwischen den Hubzylindern (31, 32, 33) und einer Druckquelle vorgesehenen Steuereinrichtung (40), die derart betätigbar bzw. stellbar ist, daß die Sätze (25, 26, 27) Arbeitswerkzeuge (30) gemeinsam in ihre Arbeitsstellung abgesenkt oder gemeinsam in ihre Transportstellung ausgehoben werden, gekennzeichnet durch eine Teilbreitensteuerung (50) zur Änderung der Arbeitsbreite des Gerätes mit wenigstens zwei zwischen zwei Stellungen verstellbaren Ventilen (51, 52, 53), die einem jeden Hubzylinder (31, 32, 33) zugeordnet, in deren Verbindung zur Druckquelle vorgesehen und derart fernbedienbar sind, daß bei einer Stellung der Steuereinrichtung (40), in der die Sätze (25, 26, 27) Arbeitswerkzeuge (30) in ihrer Arbeitsstellung abgesenkt sind, ein Satz (25, 26, 27) Arbeitswerkzeuge (30) oder mehrere Sätze (25; 26, 25; 27, 26; 27) Arbeitswerkzeuge (30) oder alle Sätze (25, 26, 27) Arbeitswerkzeuge (30) in ihre Transportstellung ausgehoben werden.

2. Arbeitsgerät nach Anspruch 1, dadurch gekennzeichnet, daß jedes Ventil als elektromagnetisches Umkehr- oder als Sperrventil (51, 51b, 52, 53) ausgebildet ist.

3. Arbeitsgerät nach Anspruch 2, dadurch gekennzeichnet, daß das Umkehrventil (51, 52, 53) als Vierwege/Zweistellungsventil ausgebildet ist und die Hubzylinder (31, 32, 33) zueinander parallel geschaltet sind.

4. Arbeitsgerät nach einem oder mehreren der vorherigen Ansprüche, wobei die Steuereinrichtung als ein zwischen einer ersten und einer zweiten Stellung verstellbares Steuerventil (40) ausgebildet ist, das in seiner ersten Stellung eine Druckmittelbeaufschlagung der zylinderseitigen Enden der Hubzylinder (31, 32, 33) und in seiner zweiten Stellung eine Druckmittelbeaufschlagung der kolbenstangenseitigen Enden der Hubzylinder (31, 32, 33) zuläßt, dadurch gekennzeichnet, daß jedes Umkehrventil (51, 52, 53) in seiner ersten Stellung die Druckmittelbeaufschlagung der Hubzylinder (31, 32, 33) durch das Steuerventil (40) unverändert läßt und in seiner zweiten Stellung die Druckmittelbeaufschlagung der Hubzylinder (31, 32, 33) umkehrt.

5. Arbeitsgerät nach Anspruch 4, dadurch gekennzeichnet, daß jedes Umkehrventil (51, 52, 53) mit einem Solenoid (51a, 52a, 53a) versehen und jeder Solenoid mit einer elektrischen Kraftquelle (65) über einen von Hand betätigbaren Schalter (61, 62, 63) verbindbar ist, wobei der Schalter (61, 62, 63) in der ersten Stellung des Umkehrventils (51, 52, 53) offen und in der zweiten Stellung des Umkehrventils (51, 52, 53) geschlossen ist.

6. Arbeitsgerät nach Anspruch 5, dadurch gekennzeichnet, daß die Eingänge der Schalter (61, 62, 63) mit ihren Ausgängen verdrahtet sind und daß in dieser Verbindung ein Haupthubschalter (70) vorgesehen ist.

7. Arbeitsgerät nach Anspruch 6, dadurch gekennzeichnet, daß zwischen dem Haupthubschalter (70) und den Ausgängen der Schalter (61, 62, 63) Dioden (71, 72, 73) vorgesehen sind.

8. Arbeitsgerät nach Anspruch 5, dadurch gekennzeichnet, daß die Eingänge der Schalter (61, 62, 63) mit dem Ausgang eines normalerweise offenen Relaisschalters (66b) eines ersten Relais (66) verbunden sind, dessen Spule (66a) mit der ersten Ausgangsklemme eines Tasters (68) und mit dem Eingang eines normalerweise geschlossenen Relaisschalters (67b) eines zweiten Relais (67) verbunden ist, dessen Spule (67a) mit einer zweiten Ausgangsklemme des Tasters (68) verbunden und ebenso wie Ausgang des normalerweise geschlossenen Relaisschalters (67b) geerdet ist, wobei der Eingang des normalerweise offenen Relaisschalters (66b) und der Eingang des Tasters (68) mit der elektrischen Kraftquelle (65) und der Ausgang des normalerweise offenen Relaisschalters (66b) mit dem Eingang seiner Spule (66a) verbunden sind.

9. Arbeitsgerät nach einem oder mehreren der vorherigen Ansprüche, wobei die Steuereinrichtung als ein zwischen einer ersten und einer zweiten Stellung verstellbares Steuerventil (40) ausgebildet ist, das in seiner ersten Stellung eine Druckmittelbeaufschlagung der zylinderseitigen Enden der Hubzylinder (31, 32, 33) und in seiner zweiten Stellung eine Druckmittelbeaufschlagung der kolbenstangenseitigen Enden der Hubzylinder (31, 32, 33) zuläßt, dadurch gekennzeichnet, daß jedes Sperrventil (51b) in seiner ersten Stellung die Druckmittelbeaufschlagung der Hubzylinder (31, 32, 33) durch das Steuerventil (40) unverändert läßt und in seiner zweiten Stellung eine der beiden zu jeden Hubzylinder (31, 32, 33) führenden Leitungen (44, 46) sperrt.

## Claims

1. Work implement having a base frame (12), at least two sets (25, 26, 27) of working tools (30), which are connected on the base frame (12) in a manner adjustable between a raised transport position and a lowered working position in the field, at least two lift cylinders (31, 32, 33), each of which is connected to a set (25, 26, 27) of working tools (30), and having a control device (40) provided between the lift cylinders (31, 32, 33) and a pressure source which can be operated or set such that the sets (25, 26, 27) of working tools (30) are jointly lowered into their working position or jointly raised into their transport position, characterised by a partial width control (50) for changing the working width of the implement, having at least two valves (51, 52, 53) displaceable between two positions which, associated with each lift cylinder (31, 32, 33), are provided in the connection of the latter to the pressure source and can be controlled remotely such that in a position of the control device (40), in which the sets (25, 26, 27) of working tools (30) are lowered in their working position, one set (25, 26, 27) of working tools (30) or several sets (25; 26, 25;27, 26;27) of working tools (30) or all sets (25, 26, 27) of working tools (30) are raised into their transport position.

2. Work implement according to Claim 1, characterised in that each valve is constructed as an electromagnetic reversing valve or as a blocking valve (51, 51b, 52, 53).

3. Work implement according to Claim 2, characterised in that the reversing valve (51, 52, 53) is constructed as a four-way, two-position valve and the lift cylinders (31, 32, 33) are connected to one another in parallel.

4. Work implement according to one or several of the preceding claims, the control device being constructed as a control valve (40) displaceable between a first and a second position, which in its first position permits a pressure medium to act on the ends of the lift cylinders (31, 32, 33) on the cylinder side and in its second position permits a pressure medium to act on the ends of the lift cylinders (31, 32,33) on the piston rod side, characterised in that, in its first position, each reversing valve (51, 52, 53) leaves the application of the pressure medium to the lift cylinders (31, 32, 33) by the control valve (40) unchanged and, in its second position, reverses the application of the pressure medium to the lift cylinders (31, 32, 33).

5. Work implement according to Claim 4, characterised in that each reversing valve (51, 52, 53) is provided with a solenoid (51a, 52a, 53a) and each solenoid can be connected via a manually operable switch (61, 62, 63) to an electric power supply (65), the switch (61, 62, 63) being open in the first position of the reversing valve (51, 52, 53) and closed in the second position of the reversing valve (51, 52, 53).

6. Work implement according to Claim 5, characterised in that the inputs of the switches (61, 62, 63) are wired to their outputs and that a master raise switch (70) is provided in this connection.

7. Work implement according to Claim 6, characterised in that diodes (71, 72, 73) are provided between the master raise switch (70) and the outputs of the switches (61, 62, 63).

8. Work implement according to Claim 5, characterised in that the inputs of the switches (61, 62, 63) are connected to the output of a normally open relay switch (66b) of a first relay (66), the coil (66a) of which is connected to the first output terminal of a key (68) and to the input of a normally closed relay switch (67b) of a second relay (67), the coil (67a) of which is connected to a second output terminal of the key (68) and, like the output of the normally closed relay switch (67b), is earthed, the input of the normally open relay switch (66b) and the input of the key (68) being connected to the electric power supply (65) and the output of the normally open relay switch (66b) being connected to the input of its coil (66a).

9. Work implement according to one or several of the preceding claims, the control device being constructed as a control valve (40) displaceable between a first and a second position, which in its first position permits a pressure medium to act on the ends of the lift cylinders (31, 32, 33) on the cylinder side and in its second position permits a pressure medium to act on the ends of the lift cylinders (31, 32,33) on the piston rod side, characterised in that, in its first position, each blocking valve (51b) leaves the application of the pressure medium to the lift cylinders (31, 32, 33) by the control valve (40) unchanged and, in its second position, blocks one of the two lines (44, 46) leading to each lift cylinder (31, 32, 33).

## Revendications

1. Machine de travail comportant un châssis de base (12), au moins deux ensembles (25,26,27) d'outils de travail (30), qui sont raccordés au châssis de base (12) de manière à pouvoir être déplacés entre une position soulevée de transport et une position abaissée de travail sur le champ, au moins deux vérins de levage (31,32,33), dont l'un respectivement est relié à un ensemble (25,26,27) d'outils de travail (30), et un dispositif de commande (40), qui est prévu entre les vérins de levage (31,32,33) et une source de pression et qui peut être actionné ou réglé de telle sorte que les ensembles (25,26,27) d'outils de travail (30) sont abaissés en commun dans leur position de travail ou sont soulevés en commun dans leur position de transport, caractérisée par une unité de commande de largeur partielle (50) pour modifier la largeur de travail de la machine, comportant au moins deux soupapes (51,52,53) pouvant être déplacées entre deux positions et qui, en étant associées à chaque vérin de levage (31,32,33), sont prévues dans la liaison entre les vérins et la source de pression et peuvent être télécommandées de telle sorte que, lorsque le dispositif de commande (40) est dans une position, dans laquelle les ensembles (25,26,27) d'outils de travail (30) sont abaissés dans leur position de travail, un ensemble (25,26,27) d'outils de travail (30) ou plusieurs ensembles (25;26,25;27,26;27) d'outils de travail (30) ou tous les ensembles (25,26,27) d'outils de travail (30) peuvent être soulevés dans leur position de transport.

2. Machine de travail selon la revendication 1, caractérisée en ce que chaque soupape est agencée sous la forme d'une soupape électromagnétique d'inversion de marche ou de blocage (51,51b,52,53).

3. Machine de travail selon la revendication 2, caractérisée en ce que la soupape d'inversion de marche (51,52,53) est agencée sous la forme d'une soupape à quatre voies / à deux positions et que les vérins de levage (31, 32,33) sont branchés en parallèle.

4. Machine de travail selon une ou plusieurs des revendications précédentes, dans laquelle le dispositif de commande est agencé sous la forme d'une soupape de commande (40), qui est déplaçable entre une première position et une seconde position et qui, dans sa première position, autorise l'application d'un fluide sous pression aux extrémités, situées côté cylindre, des vérins de levage (31,32,33) et, dans sa seconde position, autorise l'application d'un fluide sous pression aux extrémités, situées côté tige de piston, des vérins de levage (31,32,33), caractérisée en ce que, dans sa première position, chaque soupape d'inversion de marche (51,52,53) permet sans modification l'application du fluide sous pression aux vérins de levage (31,32,33) par la soupape de commande (40) et, dans sa seconde position, inverse l'application du fluide sous pression aux vérins de levage (31, 32, 33).

5. Machine de travail selon la revendication 4, caractérisée en ce que chaque soupape d'inversion de marche (51,52,53) est équipée d'un électroaimant (51a,52a,53a) et que chaque électroaimant peut être relié à une source d'énergie électrique (65) par l'intermédiaire d'un interrupteur (61,62,63) pouvant être actionné manuellement, l'interrupteur (61,62,63) est ouvert lorsque la soupape d'inversion de marche (51,52,53) est dans la première position, et est fermé lorsque la soupape d'inversion de marche (51,52,53) est dans la seconde position.

6. Machine de travail selon la revendication 5, caractérisée en ce que les entrées des interrupteurs (61, 62,63) sont raccordées par câblage à leurs sorties et qu'un interrupteur de levage principal (70) est prévu dans cette liaison.

7. Machine de travail selon la revendication 6, caractérisée en ce que des diodes (71,72,73) sont prévues entre l'interrupteur de levage principal (70) et les sorties des interrupteurs (61,62,63).

8. Machine de travail selon la revendication 5, caractérisée en ce que les entrées des interrupteurs (61, 62,63) sont reliées à la sortie d'un interrupteur normalement ouvert (66b) d'un premier relais (66), dont la bobine (66a) est reliée à la première borne de sortie d'une touche (68) et à l'entrée d'un interrupteur normalement fermé (67b) d'un second relais (67), dont la bobine (67a) est reliée à une seconde borne de sortie de la touche (68) et est raccordée à la terre de même que la sortie de l'interrupteur de relais normalement fermé (67b), l'entrée de l'interrupteur de relais normalement ouvert (66b) et l'entrée de la touche (68) étant reliées à la source d'énergie électrique (65) et la sortie de l'interrupteur de relais normalement ouvert (66b) étant reliée à l'entrée de sa bobine (66a).

9. Machine de travail selon une ou plusieurs des revendications précédentes, dans laquelle le dispositif de commande est agencé sous la forme d'une soupape de commande (40) déplaçable entre une première position et une seconde position et qui, dans sa première position, autorise l'application d'un fluide sous pression aux extrémités, situées côté cylindre, des vérins de levage (31,32,33) et, dans sa seconde position, l'application d'un fluide sous pression aux extrémités, situées côté tige de piston, des vérins de levage (31,32,33), caractérisée en ce que dans sa première position, chaque soupape de blocage (51b) permet, sans modification, l'application du fluide comprimé aux vérins de levage (31,32,33) par la soupape de commande (40) et, dans sa seconde position, bloque l'une des deux lignes (44,46) aboutissant à chaque vérin de levage (31,32,33).
